# EUROPÄISCHE PATENTSCHRIFT

(11) **EP 2 828 063 B1**
(45) Veröffentlichungstag und Bekanntmachung des Hinweises auf die Patenterteilung: **09.05.2018**
(21) Anmeldenummer: 13712140.6
(22) Anmeldetag: 18.03.2013
(51) Int. Cl.: B29C 59/04, B29C 43/24, B44F 1/02

(54) **VERFAHREN ZUR HERSTELLUNG EINES BODENBELAGS**
PROCESS FOR MAKING A FLOOR COVERING
PROCÉDÉ DE FABRICATION D'UN REVÊTEMENT DE SOL

(30) Priorität: 19.03.2012 DE 102012005312
(43) Veröffentlichungstag der Anmeldung: 28.01.2015
(73) Patentinhaber: Nora Systems GmbH, 69469 Weinheim (DE)
(72) Erfinder: RISCHER, Dieter, 69518 Abtsteinach (DE); KROEGER, Mario, 76646 Bruchsal (DE)
(74) Vertreter: Reiser & Partner Patentanwälte mbB
(86) Internationale Anmeldenummer: PCT/EP2013/000814
(87) Internationale Veröffentlichungsnummer: WO 2013/139460

(56) Entgegenhaltungen:
- EP-A1- 1 101 606
- DE-A1- 4 025 296
- DE-A1-102005 017 169
- DE-T2- 60 007 560
- US-A- 5 203 941
- US-A1- 2007 261 344
- US-B2- 7 306 688
- DATABASE WPI Week 200409 Thomson Scientific, London, GB; AN 2004-084831 XP002698370, -& JP 2003 136555 A (SHINKO KASEI KK) 14. Mai 2003 (2003-05-14)

## Beschreibung

Die Erfindung betrifft ein Verfahren zur Herstellung eines Bodenbelags, umfassend zumindest eine im Wesentlichen bahn- oder plattenförmige Schicht, welche auf zumindest einer Oberfläche mit einem optisch wahrnehmbaren Muster versehen ist und einen derart hergestellten Bodenbelag.
Aus der DE 39 42 505 C1 ist es bekannt, auf eine Oberfläche eines Bodenbelags eine Prägestruktur aufzubringen. Die Prägestruktur wird während der Urformung des Bodenbelags, insbesondere während eines Kalandriervorgangs auf die Oberfläche eines Bodenbelags aufgebracht. Dazu wird das Material des Bodenbelags durch eine Walzenanordnung hindurchgeführt, wobei entweder die Oberfläche der Walzen mit einem Prägemuster versehen sind oder zwischen Walze und Material befindet sich ein Papier, beispielsweise ein Trennpapier, welches mit dem Prägemuster versehen ist. Während des Durchgangs durch die Walzenanordnung wird das Prägemuster von der Walze oder von dem Papier auf das Material und damit auf die Oberfläche des Bodenbelags übertragen. Dabei ist das Prägemuster makroskopisch ausgebildet, so dass sich auf dem Bodenbelag eine reliefartige Struktur ausbildet. Bei einem häufig verwendeten Prägemuster bildet sich auf der Oberfläche des Bodenbelags beispielsweise eine schieferartige Oberfläche heraus.
In der US 5,203,941 ist ein Verfahren zur Herstellung von Paneelen beschrieben, bei welchem eine Dekorfolie auf die Kunststoffschicht aufgebracht und ein dreidimensionales Muster in die Schicht eingebracht wird.

Bei einer derartigen Prägestruktur ist nachteilig, dass diese aufgrund der makroskopischen Struktur ein nachteiliges Anschmutzverhalten aufweist und dass dadurch die Reinigungsfähigkeit gegenüber glatten Bodenbelägen verschlechtert ist.

Aus US-A-2007 261 344 ist ein Verfahren zur Herstellung eines Bodenbelags aus einem elastomeren Werkstoff bekannt, bei dem zunächst das Material in eine bahnenförmige Form überführt und anschließend zur Vulkanisation einer Einrichtung zugeführt wird, wobei die Einrichtung eine Walze umfasst und zwischen Walze und Schicht eine Papierlage vorgesehen ist. Der Erfindung liegt die Aufgabe zugrunde, einen Bodenbelag bereitzustellen, der trotz nicht wahrnehmbarer Strukturierung mit einem optisch wahrnehmbaren Muster versehen ist.

Diese Aufgabe wird mit den Merkmalen von Anspruch 1 gelöst. Auf vorteilhafte Ausgestaltungen nehmen die Unteransprüche Bezug.

Bei dem erfindungsgemäßen Verfahren zur Herstellung eines bahnen- oder plattenförmigen Bodenbelags wird zunächst das Material der Schicht bereitgestellt und mittels Kalander in eine die Schicht bildende bahnenförmige Form überführt und anschließend zur Vulkanisation einer Einrichtung zugeführt, wobei die Einrichtung eine Walzenanordnung mit Walzen umfasst und wobei zwischen Walze und Schicht eine Trennlage vorgesehen ist und wobei die Trennlage mit einem Übertragungsmuster versehen ist und wobei die Schicht mit dem Übertragungsmuster während des Durchlaufens der Schicht durch die Einrichtung an die Schicht angepresst wird, wodurch sich ein optisch wahrnehmbares Muster mit den Zonen unterschiedlichen Glanzgrades auf der Schicht bildet.

Erfindungsgemäß wird dabei das Muster mit den Zonen unterschiedlichen Glanzgrades auf den Bodenbelag übertragen, ohne dass eine zusätzliche Schicht auf den Bodenbelag aufgebracht wird. Das Verfahren ermöglicht die kontinuierliche Herstellung eines mit einem mikroskopischen Muster versehenen Bodenbelags. Ferner ist die Strukturierung in den zur Herstellung eines aus gummielastischem Material bestehenden Bodenbelags notwendigen Verfahrensschritt der kombinierten Wärme- und Druckbehandlung integriert, so dass darüber hinaus auch keine zusätzlichen Verfahrensschritte erforderlich sind.

Wenigstens eine Walze kann auf der der Schicht zugewandten Seite mit einer Trennlage bedeckt sein, wobei die Trennlage mit dem Muster versehen ist.

Die Trennlage ist dabei vorzugsweise als Trennpapier ausgebildet. In anderen Ausgestaltungen ist auch denkbar, die Trennlage aus einer Metallfolie herzustellen. Bei dieser Ausgestaltung ist vorteilhaft, dass nicht die kostenintensive Rolle mit dem Muster versehen ist, sondern das vergleichsweise kostengünstige Trennpapier. Des Weiteren ist vorteilhaft, dass eine Änderung des Musters möglich ist, ohne die Walze austauschen zu müssen. Die Trennlage kann in sowohl zur mehrmaligen Verwendung als auch zur lediglich einmaligen Verwendung ausgebildet sein.

Die Trennlage kann mit einer Beschichtung versehen sein, welche Zonen des Übertragungsmusters bildet. Dabei ist die Beschichtung vorzugsweise als Lackschicht ausgebildet. Die Lackschicht ist erfindungsgemäß so ausgebildet, dass diese auf der Trennlage verbleibt und sich nur dessen Mikrostruktur auf den Bodenbelag überträgt. Überraschenderweise hat sich herausgestellt, dass der auf die Trennlage aufgetragene Lack ausreichend stabil ist, so dass er sich zum einen nicht von der Trennlage ablöst und zum anderen ist der Lack auch Formstabil, um dessen Mikrostruktur auf den Bodenbelag zu übertragen und dort ein optisch wahrnehmbares Muster zu bilden. Es ist auch denkbar, dass weitere Zonen unmittelbar aus der unbehandelten Oberfläche der Trennlage gebildet werden.

Die auf das bahnenförmige Material übertragene Struktur ist mikroskopisch und weist eine Tiefe von höchstens 30 µm, vorzugsweise von höchstens 10 µm auf. Dadurch unterscheidet sich das in das bahnenförmige Material eingebrachte Muster von bekannten Prägestrukturen, welche makroskopisch sind und eine wesentlich größere Tiefe aufweisen, also wesentlich tiefer in das bahnenförmige Material hineinragen.

Die Lackschicht kann zur Bildung des Übertragungsmusters Zonen aus einem ersten Lack mit einem ersten Glanzgrad und Zonen aus einem zweiten Lack mit einem zweiten Glanzgrad umfassen. Dabei ist vorzugsweise der erste Lack als Glanzlack ausgebildet, welcher zum einen eine geringe Oberflächen-Rauheit aufweist und zum anderen wenigstens eine seidenglänzende Struktur aufweist. Der zweite Lack ist vorzugsweise als Mattlack ausgebildet, welcher zum einen eine höhere Oberflächen-Rauheit aufweist als der Glanzlack und zum anderen höchstens eine seidenmatte Struktur aufweist. Um eine Strukturierung der Oberfläche im Form eines Musters erzielen zu können, wird zunächst eine erste Lackschicht vollflächig auf die Trennlage aufgetragen und nach dem Trocknen der ersten Lackschicht, welche entweder matt oder glänzend ausgebildet sein kann, wird die zweite Lackschicht zonenweise auf die erste Lackschicht aufgetragen, so dass sich das optisch wahrnehmbare Muster ergibt.

Ein durch das erfindungsgemäße Verfahren hergestellter Bodenbelag umfasst zumindest eine bahnen- oder plattenförmige Schicht, welche auf zumindest einer Oberfläche mit einem optisch wahrnehmbaren Muster versehen ist, wobei das Muster Zonen unterschiedlichen Glanzgrades aufweist.

Bei der aus dem Stand der Technik bekannten makroskopischen Prägung ergibt sich zwar eine reliefartige Oberflächenstruktur, jedoch ist die Lichtreflexion, abgesehen von den senkrechten Rändern der Oberflächenstruktur in jedem Flächenabschnitt identisch. Diese gleichbleibende Lichtreflexion resultiert aus der Tatsache, dass in das Trennpapier zwar ein Muster eingeprägt wird, die mikroskopische Oberflächenstruktur des Trennpapiers dabei aber unverändert bleibt. Durch die Prägung wird demnach das zweidimensionale Trennpapier in eine dreidimensionale Struktur überführt, ohne dass dabei die Oberflächenstruktur des Trennpapiers verändert wird. Im Unterschied zu dieser bekannten Ausgestaltung kommt es bei dem durch das erfindungsgemäße Verfahren hergestellten Bodenbelag auf eine Veränderung der mikroskopischen Struktur an, welches aus den vorgenannten Gründen allein durch eine makroskopische Prägung des Trennpapiers oder der Walze nicht zu erreichen ist. Der Bodenbelag ist mit einem durch mikroskopische Effekte hervorgerufenen Muster versehen. Eine makroskopische Strukturierung des Bodenbelags ist dabei nicht vorgesehen, diese kann allenfalls zusätzlich, beispielsweise durch einen zusätzlichen Bearbeitungsschritt in den Bodenbelag eingebracht werden. Insgesamt ergibt sich durch die Prägung ein dreidimensionales Muster, welches auch so wahrgenommen wird. Im Unterschied dazu, wird das Muster bei der erfindungsgemäßen Ausgestaltung nicht dreidimensional wahrgenommen. Die Musterwahrnehmung erfolgt durch die unterschiedlichen Glanzgrade.

Die mikroskopische Oberflächenstruktur ist direkt in das bahnenförmige Material eingebracht und dringt bis maximal 30 µm, vorzugsweise höchstens 10 µm in das Material ein. Im Gegensatz dazu dringen die durch Prägung bekannten Strukturen mindestens 0,1 mm und damit wesentlicher tiefer in das Material ein.

Der durch das erfindungsgemäße Verfahren hergestellte Bodenbelag weist Zonen unterschiedlichen Glanzgrades auf. Glanz ist gekennzeichnet durch eine gerichtete Reflexion des einfallenden Lichts und wird auch als Spiegelreflexion bezeichnet. Der Glanzgrad kann entsprechend DIN 67530/ISO 2813 durch eine Messung mit einem Reflektometer bestimmt werden. Ein Reflektometer sendet einen Lichtstrahl unter einem vorgegebenen Einfallwinkel auf die zu prüfende Oberfläche und empfängt die den durch die Oberfläche reflektierten Lichtstrahl. Das Verhältnis der Lichtintensität zwischen gesendetem und empfangenem Lichtstrahl charakterisiert den Glanzgrad einer Oberfläche. Die Einteilung des Glanzgrades erfolgt in Stufen von hochglänzend (20° Einfallwinkel, 60% bis 70% Reflektion) über glänzend (60°, 55% bis 65%), seidenglänzend (60°, 25% bis 35%), seidenmatt (85°, 40% bis 50%) bis matt (85°, 6% bis 8%).

Vorzugsweise sind erste Zonen glänzender ausgebildet als zweite Zonen. Dabei können in einer ersten Ausgestaltung erste Zonen wenigstens seidenglänzend ausgebildet und zweite Zonen können höchstens seidenmatt ausgebildet sein. Gemäß DIN 67530/ISO 2813 weist eine seidenglänzende Schicht bei einem Messwinkel von 60° einen Reflektionsanteil von 25% bis 35% und eine seidenmatte Schicht weist bei einem Messwinkel von 85% einen Reflektionsanteil von 40% bis 50% auf. Dabei ist die Oberfläche des Bodenbelags derart strukturiert, dass ein signifikanter Anteil des auf den Bodenbelag einfallenden Lichts gerichtet von dem Bodenbelag reflektiert wird. Als Matt werden Oberflächen bezeichnet, die ein diffuses Reflexionsverhalten aufweisen. Die Reflexion des einfallenden Lichts erfolgt dabei nicht gerichtet, sondern ungerichtet. Bevorzugt sind die Zonen dabei in Form eines Musters auf dem Bodenbelag angeordnet. Beispielsweise ist es denkbar, glänzend strukturierte Streifen und matt strukturierte Streifen nebeneinander anzuordnen. Erfindungsgemäß kann die erste Zone seidenglänzend, glänzend oder hochglänzend ausgebildet sein und die zweite Zone kann seidenmatt oder matt ausgebildet sein. In einer weiteren Ausgestaltung ist es auch denkbar, dass die zweite Zone einen Glanzgrad aufweist, welcher wenigstens eine Stufe unterhalb des Glanzgrades der ersten Zone liegt.

Die erste Zone und die zweite Zone können voneinander abweichende Rauheitswerte aufweisen. Die erste, glänzend strukturierte Zone weist dabei vorzugsweise eine mittlere Rauheit Rₐ zwischen 1 µm und 2,5 µm auf (EN ISO 25178) und die zweite, matt strukturierte Zone weist vorzugsweise eine Rauheit Rₐ zwischen 3 µm und 5µm auf (EN ISO 25178) auf. Bei einer derartigen Ausgestaltung ist vorteilhaft, dass der Bodenbelag mit einem (mikroskopischen) optisch wahrnehmbaren Muster versehen werden kann, ohne dass die makroskopische Struktur der Oberfläche des Bodenbelags verändert wird. Dadurch verbessert sich das Reinigungsverhalten des Bodenbelags signifikant. Vor dem Hintergrund der Befahrbarkeit mit Fahrzeugen, beispielsweise Flurförderfahrzeugen ist insbesondere vorteilhaft, wenn der Boden mit einem Muster versehen werden kann, aber keine Reliefstruktur aufweist. Insgesamt beträgt die Eindringtiefe des optisch wahrnehmbaren Musters höchstens 30 µm, vorzugsweise höchstens 10 µm. Dadurch kann der erfindungsgemäße Bodenbelag problemlos mit Fahrzeugen jeder Art befahren werden und auch beim Gehen sind die Zonen unterschiedlichen Glanzgrades im Gegensatz zu einem makroskopischen Reliefmuster nicht zu spüren.

Die Schicht kann einen elastomeren Werkstoff umfassen. Das elastomere Material kann dabei aus einem thermoplastischen Elastomer oder aus einem Kautschuk gebildet sein. Bodenbeläge aus derartigen Werkstoffen weisen vorteilhafte Gebrauchseigenschaften wie Rutschsicherheit, Trittschalldämpfung und geringe elektrostatische Aufladung auf. Des Weiteren können die Polymere derart gewählt werden, dass der Bodenbelag zudem ein vorteilhaftes, insbesondere emissionsarmes Brandverhalten aufweist. Vorteilhafte Werkstoffe für die Matrix des Bodenbelags sind Nitril-Butadien-Kautschuk (NBR), Styrol-Butadien-Kautschuk (SBR), Butadien-Kautschuk (BR), Ethylen-Propylen-Dien-Kautschuk (EPDM), Naturkautschuk (NR), Ethylenvinylacetat (EVA) und/oder Isopren-Kautschuk (IR).

Die zumindest eine Oberfläche kann unmittelbar die dem Raum zugewandte Oberfläche des Bodenbelags bilden, wobei die Struktur vorzugsweise unmittelbar in die Schicht eingebracht ist. Auf dem technischen Gebiet der Laminat-Fußböden ist es bereits bekannt, ein Transferpapier, welches mit einem Muster versehen ist, auf das Laminat aufzutragen und fest mit diesem zu verbinden. Bei dem erfindungsgemäßen Bodenbelag ist das Muster hingegen direkt in die Oberfläche der einzigen Schicht des bahnenförmigen Materials eingebracht, so dass es denkbar ist, dass der Bodenbelag aus lediglich einer einzigen Schicht gebildet ist aus dessen Oberfläche die erfindungsgemäße Mikrostruktur ausgebildet ist. In einer anderen Ausgestaltung kann der Bodenbelag mehrere Schichten aus elastomerem und/oder gummielastischem Material aufweisen. In allen Fällen ist das optisch wahrnehmbare Muster aber in ein elastomeres Material eingebracht.

Einige Ausgestaltungen des Bodenbelags werden nachfolgend anhand der Figuren näher erläutert. Diese zeigen schematisch:
Fig. 1 das Herstellungsverfahren des Bodenbelags;
Fig. 2 den Bodenbelag.

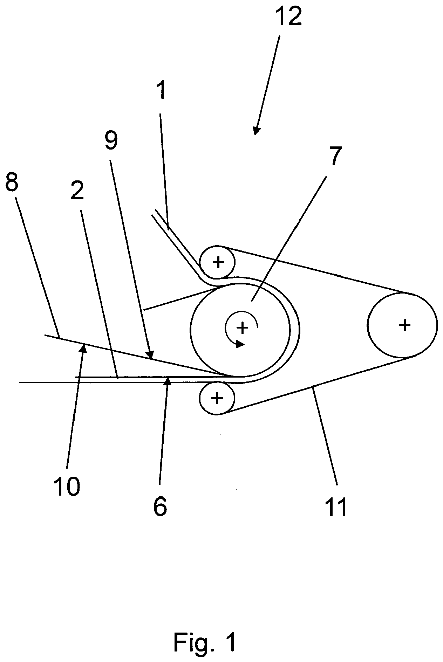

Figur 1 zeigt eine Vorrichtung zur Herstellung eines Bodenbelags 1 mit einem optisch wahrnehmbaren mikroskopischen Muster. Dabei wird zunächst das Material der Schicht 2 bereitgestellt, welches in eine die Schicht 2 bildende bahnenförmige Form überführt wird. Dazu wird das Rohmaterial, beispielsweise das Rohmaterial NBR in einem Kneter gemischt und die daraus entstandene Rohmasse wird einem Kalander zugeführt, dessen Walzenanordnung ein bahnenförmiges Auswalzen der Rohmasse bewirkt. Ferner werden während des Kalandrierens eingeschlossene Luftblasen aus dem Material ausgetrieben. Dieses bahnenförmige Material wird zur Vulkanisation, also zu der Vernetzung des elastomeren Materials, einer Einrichtung 12 zugeführt. Die Einrichtung 12 kann zur kontinuierlichen oder diskontinuierlichen Vulkanisation ausgebildet sein, wobei vorliegend eine kontinuierliche Vulkanisation in einer als Bahnenvulkanisationsanlage ausgebildeten Einrichtung 12 durchgeführt wird.

Zur kontinuierlichen Vulkanisation umfasst die Bahnenvulkanisationsanlage eine beheizbare Walze 7 um die auf einem Teilkreis ein spannbares Stahlband 11 herumgeführt ist. Das Stahlband 11 ist auf Rollen geführt und läuft mit der beheizbaren Walze 7 um. In den Spalt zwischen Stahlband 11 und Walze wird das bahnenförmige Material zur Vulkanisation eingeführt, kontinuierlich um die Walze 7 herumgeführt und anschließend entnommen. Die Bahnenvulkanisationsanlage ist derart eingerichtet, dass das bahnenförmige Material fünf Minuten in der Anlage verbleibt, wobei die Vernetzungstemperatur 180 °C beträgt. Durch die Vulkanisation vernetzt das Material und es bilden sich die gummielastischen Eigenschaften heraus. Zwischen der Walze 7 und dem bahnenförmigen Material ist eine Trennlage 8 aus einem Papier angeordnet. Diese Trennlage 8 wird von einer Rolle abgerollt, in den Spalt zwischen Walze 7 Stahlband 11 eingeführt und läuft gemeinsam mit der Walze 7 um diese herum. Die Trennlage 8 ist so in dem Spalt positioniert, dass sie an der Walze 7 anliegt und so den direkten Kontakt von bahnenförmigem Material und Walze 7 verhindert. Die Trennlage 8 weist eine Übertragungsstruktur 10 auf, wobei die Trennlage 8 mit der Übertragungsstruktur 10 während des Durchlaufens des bahnenförmigen Materials durch Walze 7 an das bahnenförmige Material angepresst wird, wodurch sich schließlich die Struktur 3 auf der aus dem bahnenförmigen Material entstehenden Schicht 2 bildet. Die Trennlage 8 ist mit einer Lackschicht 9 versehen. Die Lackschicht 9 ist auf der dem bahnenförmigen Material zugewandten Seite der Trennlage 8 angeordnet. Die Lackschicht bildet die Übertragungsstruktur 10, wobei die Lackschicht 9 zur Bildung der Übertragungsstruktur 10 Zonen 4 aus einem ersten Lack mit einem ersten Glanzgrad, nämlich seidenglänzend, und Zonen 5 aus einem zweiten Lack mit einem zweiten Glanzgrad, nämlich seidenmatt, umfasst.

Die bahnenförmige Schicht 2 kann anschließend plattförmig zugeschnitten werden.

In einer anderen Ausgestaltung ist lediglich eine erste Zone 4 aus dem Lack gebildet, während eine zweite Zone 5 unmittelbar aus der unbehandelten Oberfläche der Trennlage 8, also des Papiers gebildet ist.

Die Beschichtung der Trennlage 8 erfolgt durch einen vollflächigen Auftrag des ersten Lacks und anschließenden Auftrags des zweiten Lacks, wobei der zweite Lack nicht vollflächig aufgetragen wird, sondern derart aufgetragen wird, dass sich Zonen 4, 5 unterschiedlichen Glanzgrades auf der Trennlage 8 bilden, wodurch sich wiederum das Übertragungsmuster 10 bildet.

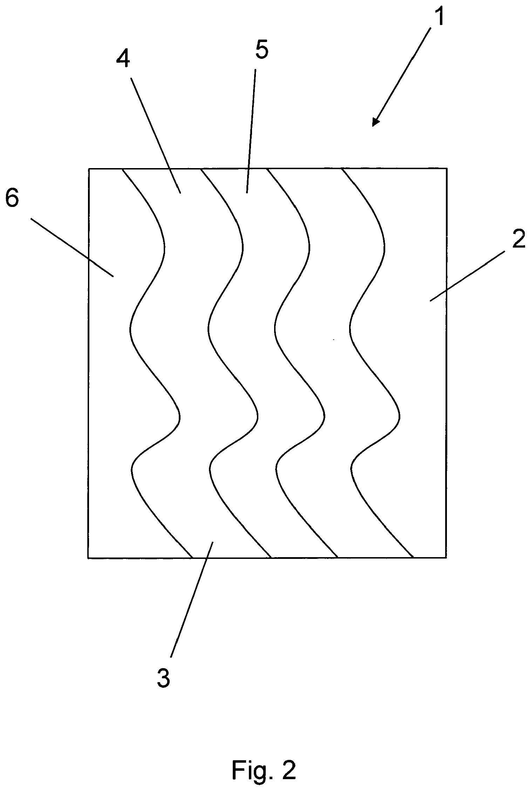

Figur 2 zeigt einen Bodenbelag 1, umfassend zumindest eine bahn- oder plattenförmige Schicht 2, bestehend aus einem elastomeren Werkstoff, in dieser Ausgestaltung NBR. Der Bodenbelag 1 weist zwei Hauptseiten auf, wobei eine Oberfläche dem Boden zugewandt ist und eine Oberfläche dem Raum zugewandt ist. Die dem Raum zugewandte Oberfläche ist mit einer optisch wahrnehmbaren Muster 3 versehen, wobei das Muster 3 Zonen 4, 5 unterschiedlichen Glanzgrades aufweist. Das Muster 3 ist unmittelbar in die Schicht 2 eingebracht, so dass der Bodenbelag 1 insgesamt aus lediglich einer einzigen Schicht 2 besteht. Die erste Zone 4 ist seidenglänzend und die zweite Zone 5 ist seidenmatt ausgebildet. Dieser unterschiedliche Glanzgrad resultiert durch voneinander abweichende Rauheitswerte von erster und zweiter Zone.

### Ausführungsbeispiele:

Die Bestimmung des Glanzgrades der nachfolgenden Ausführungsbeispiele erfolgt gemäß DIN 67530/ISO 2813 mit einem Reflektometer und die Bestimmung der mittleren Rauheit erfolgt berührungslos durch Weißlichtinterferometrie gemäß EN ISO 25178.

### Erste Probe:

Die erste Probe ist ein Bodenbelag in schwarz, welcher mit einem Muster 3 wie zuvor beschrieben versehen ist. Der Bodenbelag weist ein Muster 3 mit ersten Zonen 4 und zweiten Zonen 5 auf, wobei die ersten Zonen 4 glänzender sind als die zweiten Zonen 5:

**Glanzgrad:**

| Glänzende Zonen | | Matte Zonen | |
|---|---|---|---|
| Einfallswinkel | | Einfallswinkel | |
| 60° | 85° | 60° | 85° |
| 26% | 40% | 11% | 13% |

### Mittlere Rauheit Rₐ:

- Glänzende Zonen: 2,3 µm
- Matte Zonen: 4,4 µm

### Zweite Probe:

Die zweite Probe ist ein Bodenbelag in beige, welcher mit einem Muster 3 wie zuvor beschrieben versehen ist. Der Bodenbelag weist ein Muster 3 mit ersten Zonen 4 und zweiten Zonen 5 auf, wobei die ersten Zonen 4 glänzender sind als die zweiten Zonen 5:

**Glanzgrad:**

| Glänzende Zonen | | Matte Zonen | |
|---|---|---|---|
| Einfallswinkel | | Einfallswinkel | |
| 60° | 85° | 60° | 85° |
| 35% | 50% | 14% | 16% |

### Mittlere Rauheit Rₐ:

- Glänzende Zonen: 1,4 µm
- Matte Zonen: 3,5 µm

## Patentansprüche

1. Verfahren zur Herstellung eines Bodenbelags (1) aus einem elastomeren Werkstoff, bei dem zunächst das Material einer Schicht (2) bereitgestellt wird, welches in eine die Schicht (2) bildende bahnenförmige Form überführt und anschließend zur Vulkanisation einer Einrichtung (12) zugeführt wird, wobei die Einrichtung (12) eine Walze (7) umfasst, wobei zwischen Walze (7) und Schicht (2) eine Trennlage (8) vorgesehen ist und wobei die Trennlage (8) mit einem Übertragungsmuster (10) versehen ist **dadurch gekennzeichnet, dass** die Trennlage (8) mit dem Übertragungsmuster (10) während des Durchlaufens der Schicht (2) durch die Einrichtung (12) an die Schicht (2) angepresst wird, wodurch sich ein optisch wahrnehmbares Muster (3) mit Zonen (4, 5) unterschiedlichen Glanzgrades auf der Schicht (2) bildet.

2. Verfahren nach Anspruch 1, **dadurch gekennzeichnet, dass** die Trennlage (8) mit einer Beschichtung (9) versehen ist, welche Zonen (4, 5) des Übertragungsmusters (10) bildet.

3. Verfahren nach Anspruch 2, **dadurch gekennzeichnet, dass** die Beschichtung (9) der Trennlage (8) durch einen Lack gebildet ist.

4. Verfahren nach Anspruch 2 oder 3, **dadurch gekennzeichnet, dass** die Beschichtung (9) zur Bildung des Übertragungsmusters (10) Zonen (4) aus einem Lack mit einem ersten Glanzgrad und Zonen (5) aus einem Lack mit einem zweiten Glanzgrad umfasst.

5. Verfahren nach einem der Ansprüche 1 bis 4, **dadurch gekennzeichnet, dass** die bahnenförmige Schicht (2) im Anschluss an die Vulkanisation plattenförmig zugeschnitten wird.

## Claims

1. Method for manufacturing a floor covering (1) made from elastomer material, in which initially the material of a layer (2) is provided, said material being converted into a sheet-like shape that forms the layer (2) and subsequently is supplied to a device (12) for the vulcanisation procedure, wherein the device (12) comprises a roller (7), wherein a separating layer (8) is provided between the roller (7) and layer (2) and wherein the separating layer (8) is provided with a transfer pattern (10), **characterised in that** the separating layer (8) having the transfer pattern (10) is pressed against the layer (2) while the layer (2) is passing through the device (12), as a result of which a visually perceptible pattern (3) having zones (4, 5) of different degrees of gloss is formed on the layer (2).

2. Method according to claim 1, **characterised in that** the separating layer (8) is provided with a coating (9) that forms zones (4, 5) of the transfer pattern (10).

3. Method according to claim 2, **characterised in that** the coating (9) of the separating layer (8) is formed by means of a paint.

4. Method according to claim 2 or 3, **characterised in that** the coating (9) for forming the transfer pattern (10) comprises zones (4) of a paint having a first degree of gloss, and zones (5) of a paint having a second degree of gloss.

5. Method according to any one of the claims 1 to 4, **characterised in that** the sheet-like layer (2) is cut into a plate-shape subsequently to the vulcanisation procedure.

## Revendications

1. Procédé de fabrication d'un revêtement de sol (1) à base d'une matière élastomère, dans lequel, tout d'abord, la matière d'une couche (2) est fournie, laquelle est convertie en une forme de bande constituant la couche (2) et ensuite est acheminée pour la vulcanisation vers un moyen (12), dans lequel le moyen (12) comprend un rouleau (7), dans lequel une couche de séparation (8) est prévue entre le rouleau (7) et la couche (2) et dans lequel la couche de séparation (8) est pourvue d'un motif de transfert (10), **caractérisé en ce que** la couche de séparation (8) comportant le motif de transfert (10) est pressée contre la couche (2) pendant le passage de la couche (2) à travers le moyen (12), ce par quoi il se forme un motif (3) perceptible visuellement avec des zones (4, 5) de degrés de brillance variables sur la couche (2).

2. Procédé selon la revendication 1, **caractérisé en ce que** la couche de séparation (8) est munie d'un revêtement (9), lequel forme des zones (4, 5) du motif de transfert (10).

3. Procédé selon la revendication 2, **caractérisé en ce que** le revêtement (9) de la couche de séparation (8) est formé par une peinture.

4. Procédé selon la revendication 2 ou 3, **caractérisé en ce que** le revêtement (9) pour la formation du motif de transfert (10) comprend des zones (4) à base d'une peinture avec un premier degré de brillance et des zones (5) à base d'une peinture avec un deuxième degré de brillance.

5. Procédé selon l'une des revendications 1 à 4, **caractérisé en ce que** la couche (2) en forme de bande est découpée sous forme de plaque à la suite de la vulcanisation.
